(19) 

Europäisches
Patentamt
European
Patent Office
Office européen
des brevets

(11) **EP 4 155 979 A1**

(12) **EUROPEAN PATENT APPLICATION**
published in accordance with Art. 153(4) EPC

(43) Date of publication:
 **29.03.2023 Bulletin 2023/13**

(21) Application number: **21928354.6**

(22) Date of filing: **31.07.2021**

(51) International Patent Classification (IPC):
 **G06F 16/903** (2019.01)

(86) International application number:
 **PCT/CN2021/109933**

(87) International publication number:
 **WO 2022/267183 (29.12.2022 Gazette 2022/52)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **21.06.2021 CN 202110688956**

(71) Applicant: **KUYUN (SHANGHAI) INFORMATION
 TECHNOLOGY
 CO., LTD.
 Shanghai 200120 (CN)**

(72) Inventors:
 • **LI, Yang
   Pudong New Area, Shanghai 200120 (CN)**
 • **HAN, Qing
   Pudong New Area, Shanghai 200120 (CN)**

(74) Representative: **Ipey
 Apex House
 Thomas Street
 Trethomas
 Caerphilly CF83 8DP (GB)**

(54) **PRE-CALCULATION MODEL SCORING METHOD AND APPARATUS , DEVICE, AND STORAGE
 MEDIUM**

(57) This application discloses a method and apparatus for scoring a precomputation model, a device, and a storage medium. The method includes: calculating, in a plurality of precomputation models, a score when each precomputation model executes a same query load; determining the precomputation model with the largest score as a target precomputation model according to the score of each precomputation model; and using the target precomputation model for query calculation. According to this application, the precomputation model may be quantitatively scored, so that horizontal comparison is conveniently performed when different precomputation models execute query tasks of the same load. Therefore, a user can conveniently select different precomputation models for query calculation.

```
┌─────────────────────────────────────┐
│ In a plurality of precomputation     │
│ models, a score when each            │ ~ S102
│ precomputation model executes a      │
│ same query load is calculated        │
└─────────────────────────────────────┘
                  │
                  ▼
┌─────────────────────────────────────┐
│ The precomputation model with the    │
│ largest score is determined as a     │ ~ S104
│ target precomputation model          │
│ according to the score of each       │
│ precomputation model                 │
└─────────────────────────────────────┘
                  │
                  ▼
┌─────────────────────────────────────┐
│ The target precomputation model is   │
│ used for query calculation           │ ~ S106
└─────────────────────────────────────┘
```

**Fig. 1**

EP 4 155 979 A1

## Description

## BACKGROUND

This application claims priority to Chinese Patent Application No. 202110341652.1, filed with the Chinese Patent Office on June 21, 2021 and entitled "METHOD AND APPARATUS FOR SCORING PRECOMPUTATION MODEL, DEVICE, AND STORAGE MEDIUM", which is incorporated herein by reference in its entirety.

Technical Field

This application relates to the technical field of computers, and specifically, to a method and apparatus for scoring a precomputation model, a device, and a storage medium.

Description of Related Art

An Online Analytical Processing (OLAP) precomputation model is widely applied to a data query scenario. In the prior art, if facing with a plurality of different OLAP precomputation models, there is no way to determine and compare each OLAP model horizontally, and as a result, it lacks a solution for quantitative horizontal comparison.

## SUMMARY

This application is mainly intended to provide a method and apparatus for scoring a precomputation model, a device, and a storage medium, to resolve the above problem.

In order to realize the above purpose, an aspect of this application provides a method for scoring a precomputation model, including the following operations.

In a plurality of precomputation models, a score when each precomputation model executes a same query load is calculated.

The precomputation model with the largest score is determined as a target precomputation model according to the score of each precomputation model.

The target precomputation model is used for query calculation.

In an implementation, the operation of calculating, in the plurality of precomputation models, the score when each precomputation model executes the same query load includes the following operations.

Computation resource overhead of each precomputation model is calculated.

Query time of each precomputation model is calculated.

The score of the precomputation model is determined according to the computation resource overhead and the query time.

In an implementation, the precomputation model is a multidimensional cube model.

In an implementation, the operation of determining the score of the precomputation model according to the computation resource overhead and the query time includes the following operation.

The score of the precomputation model is calculated by means of the following formula.

$$\theta = \frac{\lambda}{A \times B}$$

$\theta$ is a marked score, $A$ is an occupied computation resource, B is the query time, and $\lambda$ is a preset unit weight.

In order to realize the above purpose, another aspect of this application provides an apparatus for scoring a precomputation model.

The apparatus for scoring a precomputation model according to this application includes a computation module, a selection module, and a query module. The computation module is configured to calculate, in a plurality of precomputation models, a score when each precomputation model executes a same query load.

The selection module is configured to determine the precomputation model with the largest score as a target precomputation model according to the score of each precomputation model.

The query module is configured to use the target precomputation model for query calculation.

In an implementation, the computation module is further configured to execute the following operations. Computation resource overhead of each precomputation model is calculated.

Query time of each precomputation model is calculated.

The score of the precomputation model is determined according to the computation resource overhead and the query time.

In an implementation, the computation module is further configured to execute the following operation.

The score of the precomputation model is calculated by means of the following formula.

$$\theta = \frac{\lambda}{A \times B}$$

$\theta$ is a marked score, $A$ is an occupied computation resource, B is the query time, and $\lambda$ is a preset unit weight.

In an implementation, the precomputation model is a multidimensional cube model.

A third aspect of this application further provides an electronic device, including at least one processor and at least one memory. The memory is configured to store one or more program instructions. The processor is configured to run the one or more program instructions to execute any of the methods described above.

A fourth aspect of this application further provides a computer-readable storage medium, including one or more program instructions. The one or more program instructions are configured to execute any of the methods described above.

In the embodiments of this application, and according to this application, the precomputation model may be quantitatively scored, so that horizontal comparison is conveniently performed when different precomputation models execute query tasks of the same load. Therefore, a user can conveniently select different precomputation models for query calculation.

**BRIEF DESCRIPTION OF THE DRAWINGS**

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:

Fig. 1 is a flowchart of a method for scoring a precomputation model according to an embodiment of this application.

Fig. 2 is a schematic diagram of a query system using a precomputation model according to an embodiment of this application.

Fig. 3 is a schematic diagram of an apparatus for scoring a precomputation model according to an embodiment of this application.

**DESCRIPTION OF THE EMBODIMENTS**

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application.

It is to be noted that the embodiments in this application and the features in the embodiments may be combined with one another without conflict. This application will now be described below in detail with reference to the drawings and the embodiments.

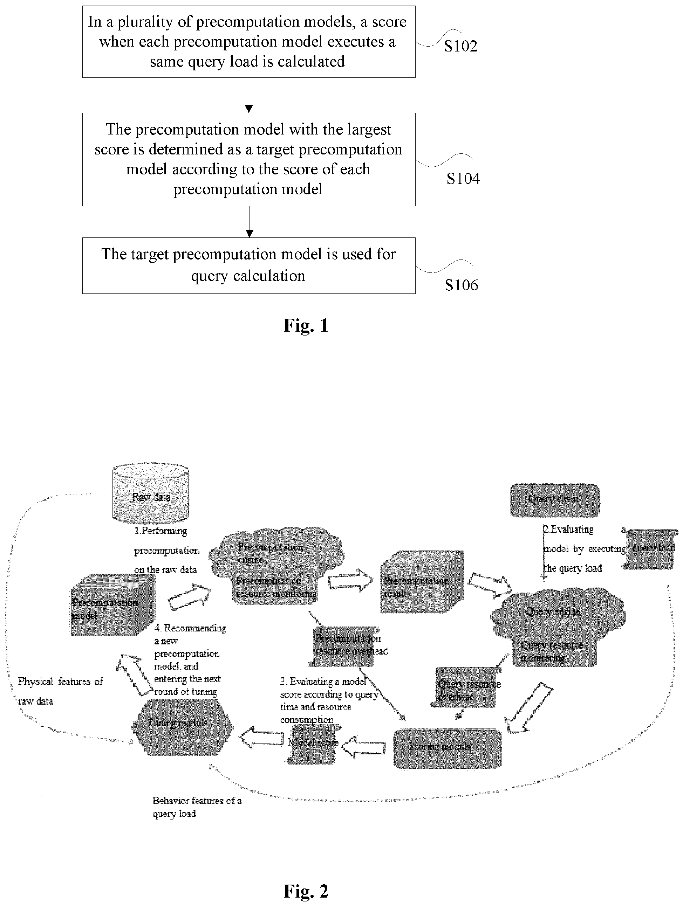

This application provides a method for scoring a precomputation model, referring to a flowchart of the method for scoring a precomputation model shown in Fig. 1. The method includes the following steps.

At S102, in a plurality of precomputation models, a score when each precomputation model executes a same query load is calculated.

Specifically, the plurality of precomputation models are pre-stored in a database. The precomputation model is a multidimensional cube model.

At S104, the precomputation model with the largest score is determined as a target precomputation model according to the score of each precomputation model.

At S106, the target precomputation model is used for query calculation.

According to the technical solution of the present invention, the precomputation model with the optimal performance may be determined for query. Therefore, query efficiency can be enhanced.

In an implementation, the step of calculating, in the plurality of precomputation models, the score when each precomputation model executes the same query load adopts the following steps.

At S202, computation resource overhead of each precomputation model is calculated.

At S204, query time of each precomputation model is calculated.

At S206, the score of the precomputation model is determined according to the computation resource overhead and the query time.

Specifically, a query system of a cloud includes a cluster of servers, including a plurality of query servers. A distributed computation mode is used for query.

Computation resource consumption includes: a CPU or GPU resource, an internal storage resource, and a storage resource.

Exemplarily, a computation resource may be a disk storage space.

Alternatively, the computation resource is a resource occupied by a network which is a network occupied by data transmission from one node to another.

Exemplarily, when the precomputation model A performs query calculation, 10 servers are used. Each server includes a CPU of 16 GB, hard disk storage of 500 GB, and an internal storage of 16 T, and a speed of a network bandwidth is 1 G per second. The 10 servers take one hour to complete the query for a query task.

For the same query task, when the precomputation model B performs query calculation, if 5 servers are used, the servers also take 1 hour to complete the query task with same configuration. Then a score of the precomputation model B is determined to be twice the score of the precomputation model A.

$$\theta = \frac{\lambda}{A \times B};$$

$\theta$ is the score, $A$ is the occupied computation resource, and B is the query time.

$\lambda$ is a preset unit weight, and the weight is obtained according to analysis and statistics of big data.

Exemplarily, for A, when 10 servers are used, each server includes the CPU of 16 GB, the hard disk storage of 500 GB, and the internal storage of 16 T, and the speed of the network bandwidth is 1 G per second, A is regarded as 1.

If 20 servers are used, other parameters remain unchanged, each server includes the CPU of 16 GB, the hard disk storage of 500 GB, and the internal storage of 16 T, and the speed of the network bandwidth is 1 G per second, A is regarded as 2.

If A is 1, it takes 1 hour, and B is 1; and $\lambda$ is 100, the score $\theta = 100$.

If A remains unchanged, it takes 2 hours, and B is 2; and the score $\theta = 50$.

If B remains unchanged, and A becomes 2, the score becomes 50.

The above formula indicates that, the score is inversely proportional to computation time, and is inversely proportional to the occupied resource. When the same task is completed, if the computation time is longer, the score is lower, and if the occupied resource is more, the score is lower.

Referring to Fig. 2, starting with a simplest precomputation model, for example, a precomputation model only including a base cuboid.

1. According to the model, raw data is pre-computed. Calculation is performed by a precomputation engine. A computation process is usually in a (cloud) computation cluster, and a precomputation result is outputted, that is, a multidimensional cube. Simultaneously, a resource monitoring module records all computation resource overhead during precomputation, including a CPU, an internal storage, a memory, a network, and the like.

2. The model is evaluated by executing a load. A query client sends a set of SQL queries according to the query load. A query engine executes query according to the precomputation result, and a query process is generally performed in the (cloud) computation cluster. Simultaneously, the resource monitoring module records all computation resource overhead during query, including the CPU, the internal storage, the memory, the network, and the like.

3. A scoring module scores the precomputation model. A basis for scoring mainly includes two parts: 1) time to complete all queries; and 2) resource overhead during precomputation and query.

4. A tuning module recommends a new precomputation model according to the current round of model scoring and other information, and returns to step 1 for the next round of precomputation model tuning. Input information of the tuning module includes:

a. The model and score of the current round, it being to be noted that the score includes detailed information such as query time, precomputation, and query resource overhead;

b (If any) the model and actual scores of previous rounds, especially an error between previously predicted model performance and actual model performance;

c. Physical properties of raw data, for example, cardinality of each column, and a correlation between columns; and

d. Behavior characteristics of query load, each SQL query representing an analysis requirement, and all of the analysis requirements representing analysis behavior features of a group of people.

It is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

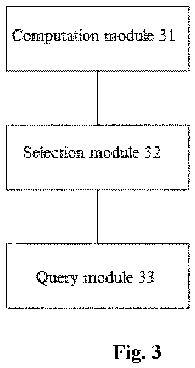

An embodiment of this application further provides an apparatus for scoring a precomputation model. As shown in Fig. 3, the apparatus includes a computation module, a selection module, and a query module.

The computation module 31 is configured to calculate, in a plurality of precomputation models, a score when each precomputation model executes a same query load.

The selection module 32 is configured to determine the precomputation model with the largest score as a target precomputation model according to the score of each precomputation model.

The query module 33 is configured to use the target precomputation model for query calculation.

In an implementation, the computation module 31 is further configured to execute the following operations. Computation resource overhead of each precomputation model is calculated.

Query time of each precomputation model is calculated.

The score of the precomputation model is determined according to the computation resource overhead and the query time.

A third aspect of this application further provides an electronic device, including at least one processor and at least one memory. The memory is configured to store one or more program instructions. The processor is configured to run the one or more program instructions to execute any of the above methods.

A fourth aspect of this application further provides a computer-readable storage medium, including one or more program instructions. The one or more program instructions are configured to execute any of the methods described above.

In this embodiment of the present invention, the processor may be an integrated circuit chip and has a signal processing capacity. The processor may be a general processor, a Digital Signal Processor (DSP), an Application Specific Integrated Circuit (ASIC), a Field-Programmable Gate Array (FPGA) or other programmable logic devices, discrete gate or transistor logic devices, and discrete hardware components.

Each method, step and logical block diagram disclosed in the embodiments of the present invention may be implemented or executed. The general processors may be microprocessors or the processor may also be any conventional processors. In combination with the method disclosed in the embodiments of the present invention, the steps may be directly implemented by a hardware processor, or may be performed by a combination of hardware and software modules in the decoding processor. The software module may be located in a mature storage medium in the field such as a Random Access Memory (RAM), a flash memory, a Read-Only Memory (ROM), a Programmable ROM (PROM) or Electrically Erasable PROM (EEPROM), and a register. The processor reads information in the memory, and completes the steps of the above method in combination with hardware.

The storage medium may be a memory. For example, the storage medium may be a volatile memory or a non-volatile memory, or may include both the volatile and non-volatile memories.

The non-volatile memory may be an ROM, a PROM, an Erasable PROM (EPROM), an EEPROM or a flash memory.

The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM).

The storage medium described in this embodiment of the present invention is intended to include, but not limited to, memories of these and any other proper types.

Those skilled in the art should note that, in one or more of the above examples, functions described in the present invention may be implemented by means of a combination of hardware and software. When the software is applied, the corresponding functions may be stored in the computer-readable medium or transmitted as one or more instructions or codes on the computer-readable medium. The computer-readable medium includes a computer storage medium and a communication medium. The communication medium includes any media transmitting a computer program from one place to another place. The storage medium may be any available media capable of being stored by a general or special computer.

It is apparent that those skilled in the art should understand that the above modules or steps of the present invention may be implemented by a general computing apparatus, and may also be gathered together on a single computing apparatus or distributed in a network composed of a plurality of computing apparatuses. Optionally, the above modules or steps of the present invention may be implemented with program codes executable by the computing apparatus, so that may be stored in a storage apparatus for execution by the computing apparatus, or can be fabricated into individual integrated circuit modules respectively, or a plurality of modules or steps thereof are fabricated into a single integrated circuit module for implementation. In this way, the present invention is not limited to any specific combination of hardware and software.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

## Claims

1. A method for scoring a precomputation model, comprising:

   calculating, in a plurality of precomputation models, a score when each precomputation model executes a same query load;
   determining the precomputation model with the largest score as a target precomputation model according to the score of each precomputation model; and
   using the target precomputation model for query calculation.

2. The method for scoring a precomputation model as claim in claim 1, wherein the calculating, in a plurality of precomputation models, a score when each precomputation model executes a same query load comprises:

   calculating computation resource overhead of each precomputation model;
   calculating query time of each precomputation model; and
   determining the score of the precomputation model according to the computation resource overhead and the query time.

3. The method for scoring a precomputation model as claim in claim 1, wherein the precomputation model is a multidimensional cube model.

4. The method for scoring a precomputation model as claim in claim 1, wherein the determining the score of the precomputation model according to the computation resource overhead and the query time comprises:

calculating the score of the precomputation model by means of the following formula, wherein

$$\theta = \frac{\lambda}{A \times B}$$

$\theta$ is a marked score, $A$ is an occupied computation resource, B is the query time, and $\lambda$ is a preset unit weight.

5. An apparatus for scoring a precomputation model, comprising:

a computation module, configured to calculate, in a plurality of precomputation models, a score when each precomputation model executes a same query load;
a selection module, configured to determine the precomputation model with the largest score as a target precomputation model according to the score of each precomputation model; and
a query module, configured to use the target precomputation model for query calculation.

6. The apparatus for scoring a precomputation model as claim in claim 5, wherein

the computation module is further configured to:
calculate computation resource overhead of each precomputation model;
calculate query time of each precomputation model; and
determine the score of the precomputation model according to the computation resource overhead and the query time.

7. The apparatus for scoring a precomputation model as claim in claim 5, wherein the precomputation model is a multidimensional cube model.

8. The apparatus for scoring a precomputation model as claim in claim 5, wherein the computation module is further configured to:

calculate the score of the precomputation model by means of the following formula, wherein

$$\theta = \frac{\lambda}{A \times B}$$

$\theta$ is a marked score, $A$ is an occupied computation resource, B is the query time, and $\lambda$ is a preset unit weight.

9. An electronic device, comprising at least one processor and at least one memory, wherein the memory is configured to store one or more program instructions; and the processor is configured to run the one or more program instructions to execute the method as claimed in any of claims 1 to 4.

10. A computer-readable storage medium, comprising one or more program instructions, wherein the one or more program instructions are configured to execute the method as claimed in any of claims 1 to 4.

In a plurality of precomputation models, a score when each precomputation model executes a same query load is calculated — S102

The precomputation model with the largest score is determined as a target precomputation model according to the score of each precomputation model — S104

The target precomputation model is used for query calculation — S106

**Fig. 1**

Raw data

1.Performing precomputation on the raw data

Precomputation engine

Precomputation resource monitoring

Precomputation result

Query client

2.Evaluating a model by executing the query load

query load

Precomputation model

4. Recommending a new precomputation model, and entering the next round of tuning

Precomputation resource overhead

Query engine

Query resource monitoring

Physical features of raw data

3. Evaluating a model score according to query time and resource consumption

Query resource overhead

Tuning module

Model score

Scoring module

Behavior features of a query load

**Fig. 2**

Computation module 31

Selection module 32

Query module 33

**Fig. 3**

## INTERNATIONAL SEARCH REPORT

| International application No. |
|---|
| **PCT/CN2021/109933** |

### A. CLASSIFICATION OF SUBJECT MATTER

G06F 16/903(2019.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 预计算, 预聚合, 预先计算, 立方体, 查询, 联机分析处理, 开销, 耗时, 时间, 负载, 得分, 分数, 成本, 评估, 评价, pre-calculation, pre-computed, query, score, load, cost, OLAP, time, evaluation

### C. DOCUMENTS CONSIDERED TO BE RELEVANT

| Category* | Citation of document, with indication, where appropriate, of the relevant passages | Relevant to claim No. |
|---|---|---|
| X | US 2018196850 A1 (FACEBOOK, INC.) 12 July 2018 (2018-07-12) <br> claims 1-20, and description, paragraphs [0030]-[0037] | 1-10 |
| A | US 2019228094 A1 (AMADEUS S.A.S) 25 July 2019 (2019-07-25) <br> entire document | 1-10 |
| A | CN 110516123 A (SUNING CLOUD COMPUTING CO., LTD.) 29 November 2019 (2019-11-29) <br> entire document | 1-10 |
| A | CN 112965991 A (MIGU CULTURE TECHNOLOGY CO., LTD. et al.) 15 June 2021 (2021-06-15) <br> entire document | 1-10 |
| A | CN 108268612 A (SHANGHAI KYLIGENCE INFORMATION TECHNOLOGY CO., LTD.) 10 July 2018 (2018-07-10) <br> entire document | 1-10 |
| A | CN 106997386 A (SHANGHAI KYLIGENCE INFORMATION TECHNOLOGY CO., LTD.) 01 August 2017 (2017-08-01) <br> entire document | 1-10 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 March 2022** | **15 March 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/109933**

| Patent document cited in search report | | | Publication date (day/month/year) | Patent family member(s) | | | Publication date (day/month/year) |
|---|---|---|---|---|---|---|---|
| US | 2018196850 | A1 | 12 July 2018 | None | | | |
| US | 2019228094 | A1 | 25 July 2019 | WO | 2019145480 | A1 | 01 August 2019 |
| | | | | EP | 3743823 | A1 | 02 December 2020 |
| CN | 110516123 | A | 29 November 2019 | WO | 2021012861 | A1 | 28 January 2021 |
| CN | 112965991 | A | 15 June 2021 | None | | | |
| CN | 108268612 | A | 10 July 2018 | WO | 2019127743 | A1 | 04 July 2019 |
| CN | 106997386 | A | 01 August 2017 | EP | 3605358 | A1 | 05 February 2020 |
| | | | | WO | 2018176623 | A1 | 04 October 2018 |
| | | | | US | 2018285439 | A1 | 04 October 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110341652